# EUROPEAN PATENT APPLICATION

(11) **EP 3 136 335 A1**
(43) Date of publication of application: **01.03.2017**
(21) Application number: 16160430.1
(22) Date of filing: 15.03.2016
(51) Int. Cl.: G06Q 50/00, G06F 15/00

(54) **METHOD AND DEVICE FOR ANALYZING SOCIAL RELATIONSHIP**

(30) Priority: 24.08.2015 CN 201510524653
(71) Applicant: Xiaomi Inc., Beijing 100085 (CN)
(72) Inventor: HUANG, Hucheng, 100085 Beijing (CN); WENG, Haibin, 100085 Beijing (CN); GENG, Hui, 100085 Beijing (CN)
(74) Representative: Hughes, Andrea Michelle

(57) **Abstract**

Embodiments herein provide a method and device for analyzing a social relationship. The method includes: acquiring target information on an interaction between a first electronic equipment and a second electronic equipment 101; and determining a social relationship between a first user of the first electronic equipment and a second user of the second electronic equipment according to the target information on the interaction 102, 303.

## Description

### TECHNICAL FIELD

The present disclosure generally relates to the field of information technology, and in particular to a method and device for analyzing a social relationship.

### BACKGROUND

With the recent flourish of information and communication technology and a trend for lighter, thinner, shorter, smaller electronic equipment, a user will often have carried or worn electronic equipment, such as a mobile phone, a wristband, and/or the like. Therefore, an inter-user social relationship may be analyzed based on user-carried electronic equipment.

Due to complexity in social relationship simulation, in related art, in general other users may be pre-defined as a social group by a user, and then data on social relationship analysis may be generated by pairing electronic equipment carried by the user and electronic equipment of another user in the same social group. Such crude analysis may give an inaccurate result.

### SUMMARY

To this end, embodiments herein provide a method and device for analyzing a social relationship, in accordance with claims which follow.

According to a first aspect herein, a method for analyzing a social relationship includes:
acquiring target information on an interaction between a first electronic equipment and a second electronic equipment; and
determining a social relationship between a first user of the first electronic equipment and a second user of the second electronic equipment according to the target information on the interaction.

In an embodiment herein, the first electronic equipment may automatically acquire the target information on the interaction with the second electronic equipment, and then the first electronic equipment may determine a social relationship between a first user of the first electronic equipment and a second user of the second electronic equipment according to the target information on the interaction. Qualitative analysis made based on user-carried electronic equipment may produce a relatively accurate result.

The acquiring target information on interaction between a first electronic equipment and a second electronic equipment may include:
acquiring raw information on the interaction between the first electronic equipment and the second electronic equipment; and
acquiring the target information on the interaction by filtering the raw information on the interaction.

The raw information on the interaction may include at least one of
a signal strength of the interaction, a distance of the interaction, and a duration of the interaction.

In an embodiment herein, qualitative analysis may be performed on the inter-user social relationship according to a signal strength of the interaction, a distance of the interaction, and a duration of the interaction, improving user experience.

The signal strength of the interaction may be a strength of a Bluetooth signal.

The distance of the interaction may be acquired by:
acquiring, according to the strength of the Bluetooth signal, the distance of the interaction.

The duration of the interaction may be acquired by:
acquiring a communication duration of communication between the first electronic equipment and the second electronic equipment by Bluetooth, and setting the determined communication duration as the duration of the interaction; or
acquiring a duration of a call between the first electronic equipment and the second electronic equipment, and setting the determined duration of the call as the duration of the interaction.

In an embodiment herein, the signal strength may be set as the strength of the Bluetooth signal between the two electronic equipment; the distance of the interaction may be determined using the strength of the Bluetooth signal; alternatively, information on positions of the two electronic equipment may be acquired respectively using GPS, and then the distance of the interaction may be computed according to the information on the positions; the duration of the interaction may be determined according to the communication duration of communication between the electronic equipment by Bluetooth, or according to the duration of a call between the electronic equipment, ensuring accuracy of qualitative analysis of the inter-user social relationship based on the carried or worn electronic equipment.

The acquiring the target information on the interaction by filtering the raw information on the interaction may include:
acquiring the target information on the interaction by purifying, denoising, and then normalizing the raw information on the interaction.

The determining a social relationship between a first user of the first electronic equipment and a second user of the second electronic equipment according to the target information on the interaction may include at least one of:
when a target signal strength of the interaction exceeds a preset strength, determining that the social relationship is a close social relationship;
when a target distance of the interaction is less than a preset distance, determining that the social relationship is a close social relationship; and when a target duration of the interaction exceeds a preset duration, determining that the social relationship is a close social relationship.

In an embodiment herein, when the target signal strength of the interaction exceeds the preset strength, and /or the target distance is less than the preset distance, and /or the target duration of the interaction exceeds the preset duration, it may be qualitatively analyzed, with a relatively high accuracy, that the users of the two electronic equipment are in a close social relationship, improving user experience. The method may further include: after the determining a social relationship between a first user of the first electronic equipment and a second user of the second electronic equipment,
providing, using an application APP, a prompt according to the social relationship. In an embodiment herein, a prompt may be provided using an APP with the inter-user social relationship produced by the qualitative analysis, improving user experience.

According to a second aspect herein, a device for analyzing a social relationship includes:
an acquiring module configured for acquiring target information on an interaction between a first electronic equipment and a second electronic equipment; and
a determining module configured for determining a social relationship between a first user of the first electronic equipment and a second user of the second electronic equipment according to the target information on the interaction acquired by the acquiring module.

The advantages and technical effects of the device herein correspond to those of the method presented above.

The acquiring module may include:
an acquiring sub-module configured for acquiring raw information on the interaction between the first electronic equipment and the second electronic equipment; and
a filtering sub-module configured for acquiring the target information on the interaction by filtering the raw information on the interaction acquired by the acquiring sub-module.

The raw information on the interaction may include at least one of
a signal strength of the interaction, a distance of the interaction, and a duration of the interaction.

The signal strength of the interaction may be a strength of a Bluetooth signal.

The acquiring sub-module may include
a first acquiring unit configured for acquiring, according to the strength of the Bluetooth signal, the distance of the interaction.

The acquiring sub-module may include:
a second acquiring unit configured for acquiring a communication duration of communication between the first electronic equipment and the second electronic equipment by Bluetooth, and setting the determined communication duration as the duration of the interaction; or
a third acquiring unit configured for acquiring a duration of a call between the first electronic equipment and the second electronic equipment, and setting the determined duration of the call as the duration of the interaction.

The filtering sub-module may include
a filtering unit configured for acquiring the target information on the interaction by purifying, denoising, and then normalizing the raw information on the interaction acquired by the acquiring sub-module.

The determining module may include at least one of:
a first determining sub-module configured for: when a target signal strength of the interaction in the target information on the interaction acquired by the filtering sub-module exceeds a preset strength, determining that the social relationship is a close social relationship;
a second determining sub-module configured for: when a target distance of the interaction in the target information on the interaction acquired by the filtering sub-module is less than a preset distance, determining that the social relationship is a close social relationship; and
a third determining sub-module configured for: when a target duration of the interaction in the target information on the interaction acquired by the filtering sub-module exceeds a preset duration, determining that the social relationship is a close social relationship.

The device may further include a prompting module configured for providing, using an application APP, a prompt according to the social relationship determined by the determining module.

According to a third aspect herein, a device for analyzing a social relationship includes:
a processor; and
a memory configured for storing an instruction executable by the processor.

The processor is configured for:
acquiring target information on an interaction between a first electronic equipment and a second electronic equipment; and
determining a social relationship between a first user of the first electronic equipment and a second user of the second electronic equipment according to the target information on the interaction.

In one particular embodiment, the steps of the method for analyzing a social relationship are determined by computer program instructions.

Consequently, according to a fourth aspect herein, the disclosure is further directed to a computer program for executing the steps of the method for analyzing a social relationship as described above when this program is executed by a computer.

This program can use any programming language and take the form of source code, object code or a code intermediate between source code and object code, such as a partially compiled form, or any other desirable form.

The disclosure is further directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Note that the general description above and detailed description below are exemplary and explanatory only, and are not intended for limiting the present disclosure.

### BRIEF DESCRIPTION OF THE DRAWINGS

Accompanying drawings herein are incorporated in and constitute a part of this specification, illustrate embodiments consistent with the disclosure and, together with the description, serve to explain the principles of the disclosure.
Fig.1 is a flowchart of a method for analyzing a social relationship according to an exemplary embodiment herein.
Fig.2 is a flowchart of a method for analyzing a social relationship according to an exemplary embodiment herein.
Fig.3 is a flowchart of a method for analyzing a social relationship according to an exemplary embodiment herein.
Fig.4 is a block diagram of a device for analyzing a social relationship according to an exemplary embodiment herein.
Fig.5 is a block diagram of a device for analyzing a social relationship according to an exemplary embodiment herein.
Fig.6 is a block diagram of a device for analyzing a social relationship according to an exemplary embodiment herein.
Fig.7A-7B are each a block diagram of a device for analyzing a social relationship according to an exemplary embodiment herein.
Fig.8 is a block diagram of a device for analyzing a social relationship according to an exemplary embodiment herein.
Fig.9 is a block diagram of a device for analyzing a social relationship according to an exemplary embodiment herein.
Fig.10 is a block diagram of a device for analyzing a social relationship according to an exemplary embodiment herein.
Fig.11 is a diagram of a structure of a device for analyzing a social relationship according to an exemplary embodiment herein.

### DETAILED DESCRIPTION

Reference will now be made in detail to exemplary embodiments, examples of which are illustrated in the accompanying drawings. In drawing-related description below, unless indicated otherwise, identical references in different drawings represent identical or like elements. Implementations in the following exemplary embodiments do not represent all implementations according to the disclosure. On the contrary, they are merely examples of devices and methods according to some aspects of the disclosure as recited in the appended claims.

A term used in an embodiment herein is merely for describing the embodiment instead of limiting the present disclosure. A singular form "a" and "the" used in an embodiment herein and the appended claims may also be intended to include a plural form, unless clearly indicated otherwise by context. Further note that a term "and /or" used herein may refer to and contain any combination or all possible combinations of one or more associated listed items.

Note that although a term such as first, second, third may be adopted in an embodiment herein to describe various kinds of information, such information should not be limited to such a term. Such a term is merely for distinguishing information of the same type. For example, without departing from the scope of the embodiments herein, the first information may also be referred to as the second information. Similarly, the second information may also be referred to as the first information. Depending on the context, "if" as used herein may be interpreted as "when" or "while" or "in response to determining".

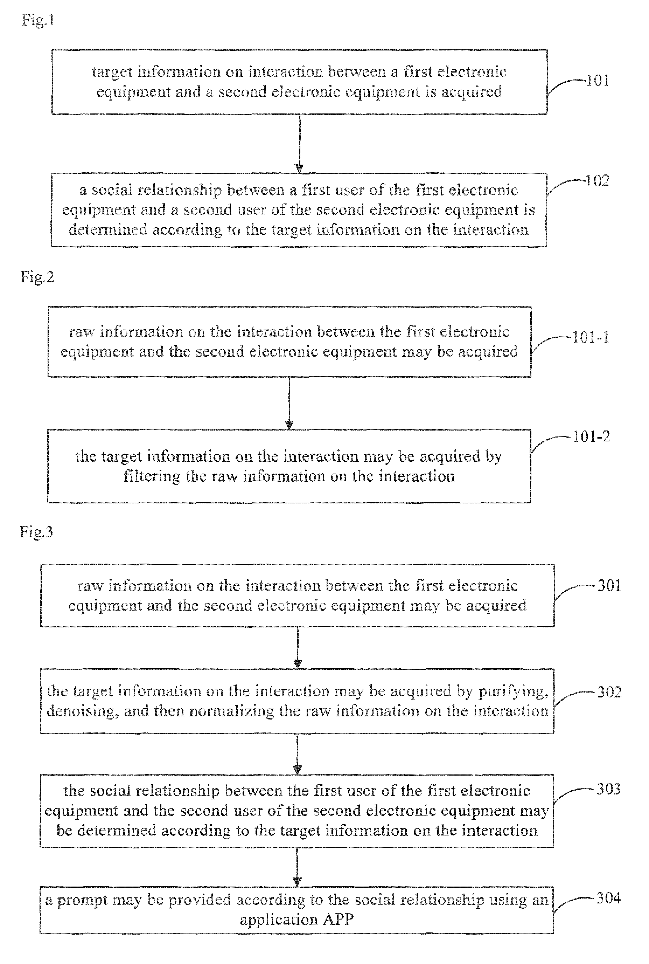

Fig.1 is a flowchart of a method for analyzing a social relationship according to an exemplary embodiment. As shown in Fig.1, the method includes steps as follows. In step 101, target information on interaction between a first electronic equipment and a second electronic equipment is acquired.

Electronic equipment involved in an embodiment herein may be various smart terminals, such as a smart mobile phone, a tablet computer, a Personal Digital Assistant (PDA), and/or the like.

Fig.2 is a flowchart of a method for analyzing a social relationship according to an exemplary embodiment. As shown in Fig.2, in step 101, the target information on the interaction may be acquired as follows.

In step 101-1, raw information on the interaction between the first electronic equipment and the second electronic equipment may be acquired.

In the step, the raw information on the interaction between the two electronic equipment is to be acquired. Optionally, the raw information on the interaction may be at least one of a signal strength of the interaction, a distance of the interaction, and a duration of the interaction. The raw information on the interaction may be acquired as follows.

### acquiring the signal strength of the interaction

Optionally in an embodiment herein, the signal strength of the interaction may be a strength of a Bluetooth signal when the two electronic equipment communicate by Bluetooth.

The first electronic equipment may first establish a Bluetooth connection with the second electronic equipment, and then acquire the strength of the Bluetooth signal between the two electronic equipment according to related art. The acquired strength of the Bluetooth signal may further be set as the signal strength of the interaction.

### acquiring the distance of the interaction

In an embodiment herein, the distance of the interaction may be acquired in either one of two modes as follows.

### mode 1

After the strength of the Bluetooth signal between the first electronic equipment and the second electronic equipment has been acquired, the distance of the interaction between the two electronic equipment may be determined according to the strength of the Bluetooth signal.

According to related art, the shorter a distance between two electronic equipment is, the greater a strength of a Bluetooth signal thereof will be; and the greater the distance is, the less the strength of the Bluetooth signal will be. Therefore, in an embodiment herein, the distance of the interaction between the first electronic equipment and the second electronic equipment may be determined according to the acquired strength of the Bluetooth signal between the two electronic equipment.

### mode 2

A raw distance may be determined using a Global Positioning System (GPS) installed on the two electronic equipment.

According to related art, information on a first position of the first electronic equipment may be acquired using the GPS installed on the first electronic equipment. For example, information on latitude and longitude of the first electronic equipment may be acquired.

Likewise according to related art, the second electronic equipment may acquire information on a second position of the second electronic equipment using the GPS installed thereon. Optionally, the information on the second position may then be sent to the first electronic equipment via the Bluetooth connection established between the two electronic equipment.

Having acquired the information on the first position and received the information on the second position, the first electronic equipment may compute the distance between the two electronic equipment by related art. The computed distance may be set as the distance of the interaction.

### acquiring the duration of the interaction

Likewise in an embodiment herein, the duration of the interaction may be determined in either one of two modes as follows.

### mode 1

As a Bluetooth connection between the first electronic equipment and the second electronic equipment has been established, the communication duration of the communication between the two electronic equipment performed via Bluetooth may directly be set as the duration of the interaction.

### mode 2

After a call between the two electronic equipment has been made, the duration of the call may be set as the duration of the interaction. In an embodiment herein, the duration of the call may be a duration generated by a common phone call service between the two electronic equipment, or a duration generated by a call between the two electronic equipment using a video or voice call application APP.

In an embodiment herein, one or more of a signal strength of the interaction, a distance of the interaction, and a duration of the interaction may be acquired in an aforementioned mode.

In step 101-2, the target information on the interaction may be acquired by filtering the raw information on the interaction.

In the step, optionally, after the raw information on the interaction has been acquired, the raw information on the interaction may be purified according to related art to remove interfering information thereof; then denoised according to related art to remove noise therein; and finally normalized according to related art, thereby acquiring the target information on the interaction.

In step 102, a social relationship between a first user of the first electronic equipment and a second user of the second electronic equipment is determined according to the target information on the interaction.

In the step, optionally, the first electronic equipment may determine, using the target information on the interaction, a close social relationship between the users of the two electronic equipment. The target information on the interaction may include one or more of a target signal strength of the interaction, a target distance, and a target duration of the interaction. A close social relationship may be analyzed for various kinds of target information on the interaction as follows.

### determining a close social relationship according to the target signal strength of the interaction

When a target signal strength of the interaction exceeds a preset strength, it may be determined that the social relationship is a close social relationship.

In general, the closer the two electronic equipment are in location, the greater the target signal strength of the interaction will be. When the target signal strength of the interaction exceeds the preset strength, the first electronic equipment may determine that the users of the two electronic equipment are in a close social relationship.

### determining a close social relationship according to the target distance of the interaction

Likewise, the less the target distance of the interaction, the closer the two electronic equipment are in location. When the target distance of the interaction is less than a preset distance, the first electronic equipment may determine that the users of the two electronic equipment are in a close social relationship.

### determining a close social relationship according to the target duration of the interaction

The greater the target duration of the interaction between the two electronic equipment, the closer the relationship between the users of the two electronic equipment may be. When the target duration of the interaction exceeds a preset duration, the first electronic equipment may determine that the users of the two electronic equipment are in a close social relationship.

In a real application, the first electronic equipment may analyze the social relationship between the users of the two electronic equipment according to multiple kinds of information in the target information on the interaction, increasing accuracy of the analysis. For example, when the target signal strength of the interaction exceeds a preset strength and the target duration of the interaction exceeds a preset duration, it may be determined that the users of the two electronic equipment are in a close social relationship.

In an embodiment herein, with the target information on the interaction, it may be determined whether the users of the two electronic equipment are in a close social relationship, or whether the users are in a relatively fixed common social relationship, such as a relationship between colleagues. Optionally, the target information on the interaction may be acquired a number of times. When multiple target distances of the interaction are close to each other, and multiple target signal strengths of the interaction are close to each other, it may be determined that the users of the two electronic equipment are in a fixed common social relationship. Of course, when relatively random target information on the interaction has been acquired over the time, or it is the first time the target information on the interaction is acquired, in an embodiment herein, it may be determined that the users of the two electronic equipment are in a social relationship between strangers or are strangers to each other.

In an embodiment herein, after the social relationship between the first user of the first electronic equipment and the second user of the second electronic equipment has been determined, the social relationship may further be applied in an application APP. That is, the method may further include a step as follows (not shown in Fig.1).

In step 103, a prompt may be provided according to the social relationship using an application APP.

In the step, after the users have established an association using an APP on the electronic equipment, a prompt may be provided according to the analyzed social relationship. For example, when the users are in a close social relationship, a close reminder may be provided; or when the users are strangers to each other, a reminder to make a friend may be provided.

In the embodiment, the first electronic equipment may automatically acquire the target information on the interaction with the second electronic equipment, and then the first electronic equipment may determine, according to the target information on the interaction, the inter-user social relationship. Qualitative analysis made based on user-carried electronic equipment may produce a relatively accurate result. A prompt may be provided using an APP with the inter-user social relationship produced by the qualitative analysis, improving user experience.

Fig.3 is a flowchart of a method for analyzing a social relationship according to an exemplary embodiment. As shown in Fig.3, the method may include steps as follows.

In step 301, raw information on the interaction between the first electronic equipment and the second electronic equipment may be acquired.

In the step, the raw information on the interaction between the two electronic equipment is to be acquired. Optionally, the raw information on the interaction may be at least one of a signal strength of the interaction, a distance of the interaction, and a duration of the interaction. The signal strength of the interaction may be a strength of a Bluetooth signal when the two electronic equipment communicate by Bluetooth.

The distance of the interaction may be acquired in either one of two modes as follows.

### mode 1

The distance of the interaction between the two electronic equipment may be determined according to the acquired strength of the Bluetooth signal.

Optionally in an embodiment herein, a correspondence between a strength of a Bluetooth signal and a distance of the interaction may be provided, as shown in Table 1.

**Table 1**

| strength of Bluetooth signal | distance of interaction |
|---|---|
| P1 | S1 |
| P2 | S2 |
| P3 | S3 |

In a real application, for one distance between the two electronic equipment, under impact of a factor such as an environmental factor, the acquired strength of the Bluetooth signal between the two electronic equipment may vary. Therefore, the strength of the Bluetooth signal in Table 1 may fall in a range, as shown in Table 2.

**Table 2**

| strength of Bluetooth signal | distance of interaction |
|---|---|
| P1-P4 | S1 |
| P2-P5 | S2 |
| P3-P6 | S3 |

In Table 2, a strength of the Bluetooth signal within the range of P1-P4 may correspond to a distance S1 of the interaction between the two electronic equipment. According to a correspondence in Table 1 or Table 2, once the strength of the Bluetooth signal between the two electronic equipment is acquired, the distance of the interaction between the first electronic equipment and the second electronic equipment may be determined.

### mode 2

Using the GPS installed on the two electronic equipment, information on positions thereof may be acquired respectively to determine a raw distance in the end.

The information on the positions of the two electronic equipment may be latitude and longitude, or distances with respect to a same reference.

Likewise, the duration of the interaction may be determined in either one of two modes as follow.

### mode 1

As a Bluetooth connection between the first electronic equipment and the second electronic equipment has been established, the communication duration of the communication between the two electronic equipment performed via Bluetooth may directly be set as the duration of the interaction.

After establishing a Bluetooth connection with the second electronic equipment, the first electronic equipment may start a timer. After the Bluetooth communication completes, the first electronic equipment may stop the timer and read a timing duration of the timer as the duration of the interaction.

### mode 2

After a call between the two electronic equipment has been made, the duration of the call may be set as the duration of the interaction. In an embodiment herein, the duration of the call may be a duration generated by a common phone call service between the two electronic equipment, or a duration generated by a call between the two electronic equipment using a video or voice call application APP.

The first electronic equipment may directly read the duration of the call with the second electronic equipment in the call record as the duration of the interaction. Alternatively, the first electronic equipment may read, as the duration of the interaction, a duration of a voice chat with the second electronic equipment performed in a voice call APP, such as a WeChat APP, installed on the first electronic equipment.

In an embodiment herein, one or more of a signal strength of the interaction, a distance of the interaction, and a duration of the interaction may be acquired in an aforementioned mode.

In step 302, the target information on the interaction may be acquired by purifying, denoising, and then normalizing the raw information on the interaction.

In the step, after the raw information on the interaction has been acquired, the raw information on the interaction may be filtered according to related art to remove interfering information, noise, and/or the like thereof, thereby acquiring the target information on the interaction.

In step 303, the social relationship between the first user of the first electronic equipment and the second user of the second electronic equipment may be determined according to the target information on the interaction.

In the step, optionally, the first electronic equipment may determine, using the target information on the interaction, a close social relationship between the users of the two electronic equipment. The target information on the interaction may include one or more of a target signal strength of the interaction, a target distance of the interaction, and a target duration of the interaction. An inter-user social relationship may be determined as a close social relationship, a common social relationship, or a social relationship between strangers according to the aforementioned method.

In step 304, a prompt may be provided according to the social relationship using an application APP.

In the step, a prompt may be provided according to the analyzed social relationship using an APP installed on the electronic equipment.

For example, having determined that the first user and the second are in a close social relationship, after the first user has logged in to a payment transaction APP on the first electronic equipment, the payment transaction APP may prompt the first user of a close relationship with the second user, and that an operation such as account binding may be performed.

Alternatively, having determined that the first user and the second user are strangers to each other, after the first user has logged in to a real-time chat APP on the first electronic equipment, the real-time chat APP may prompt the first user to make friend with the unfamiliar second user.

In the embodiment, the first electronic equipment may automatically acquire the raw information on the interaction with the second electronic equipment, acquire the target information on the interaction by purifying, denoising, and then normalizing the raw information on the interaction. Then, the first electronic equipment may determine, according to the target information on the interaction, the inter-user social relationship. A prompt may be provided using an APP with the inter-user social relationship produced by the qualitative analysis, improving user experience. Corresponding to a method for analyzing a social relationship according to an aforementioned embodiment, according to an embodiment herein, a device for analyzing a social relationship is further provided.

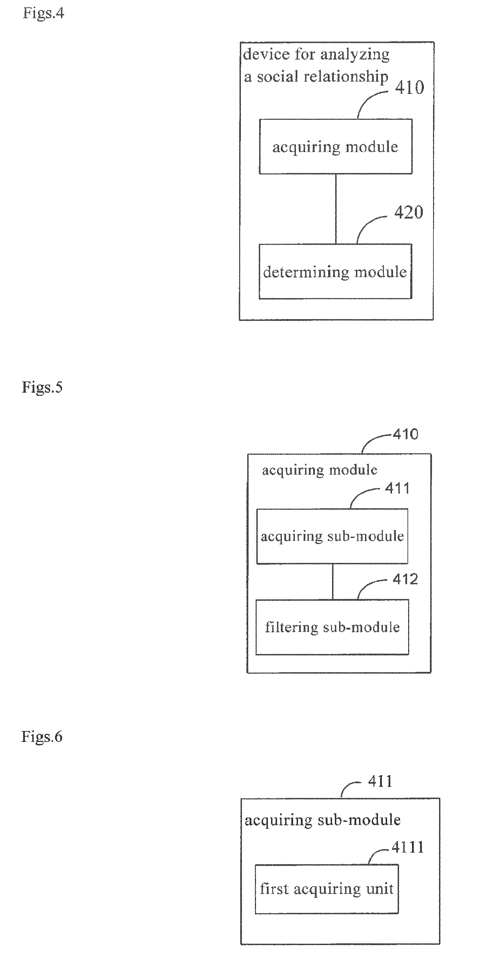

Fig.4 is a block diagram of a device for analyzing a social relationship according to an exemplary embodiment herein. As shown in Fig.4, the device includes an acquiring module 410 and a determining module 420.

The acquiring module 410 is configured for acquiring target information on interaction between a first electronic equipment and a second electronic equipment.

The determining module 420 is configured for determining a social relationship between a first user of the first electronic equipment and a second user of the second electronic equipment according to the target information on the interaction acquired by the acquiring module.

In the embodiment, the first electronic equipment may automatically acquire the target information on the interaction with the second electronic equipment, and then the first electronic equipment may determine, according to the target information on the interaction, the inter-user social relationship. Qualitative analysis made based on user-carried electronic equipment may produce a relatively accurate result.

Fig.5 is a block diagram of a device for analyzing a social relationship according to an exemplary embodiment herein. As shown in Fig.5, according to an embodiment, based on the embodiment as shown in Fig.4, the acquiring module 410 may include an acquiring sub-module 411 and a filtering sub-module 412.

The acquiring sub-module 411 may be configured for acquiring raw information on the interaction between the first electronic equipment and the second electronic equipment.

The filtering sub-module 412 may be configured for acquiring the target information on the interaction by filtering the raw information on the interaction acquired by the acquiring sub-module.

The raw information on the interaction may include at least one of
a signal strength of the interaction, a distance of the interaction, and a duration of the interaction.

In the embodiment, the raw information on the interaction between the two electronic equipment may be acquired first; the raw information on the interaction may be filtered to remove useless information therefrom; and then the inter-user social relationship may be determined according to the filtered target information on the interaction, ensuring accuracy of the analysis.

In the embodiment, the signal strength of the interaction may be a strength of a Bluetooth signal.

Fig.6 is a block diagram of a device for analyzing a social relationship according to an exemplary embodiment herein. As shown in Fig.6, according to an embodiment, based on the embodiment as shown in Fig.5, the acquiring sub-module 411 may include a first acquiring unit 4111.

The first acquiring unit 4111 may be configured for acquiring, according to the strength of the Bluetooth signal, the distance of the interaction.

In the embodiment, having acquired the strength of the Bluetooth signal between the two electronic equipment, the distance of the interaction between the two electronic equipment may be determined directly according to the strength of the Bluetooth signal, facilitating subsequent qualitative analysis of the inter-user social relationship, improving user experience.

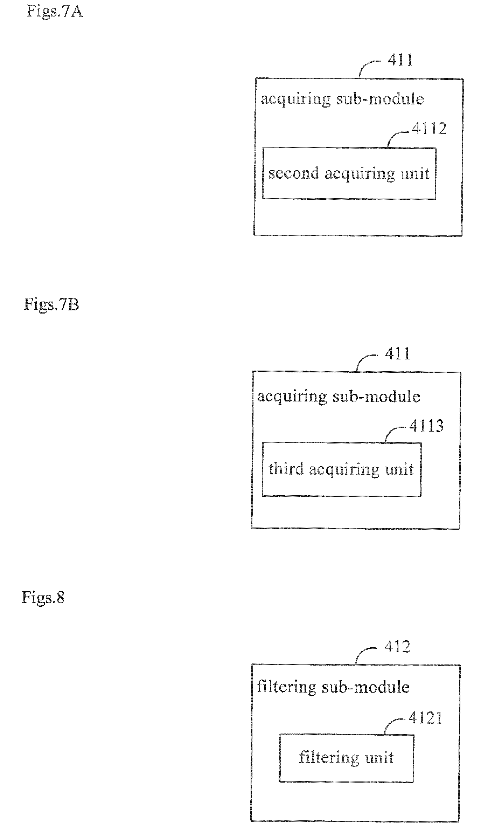

Fig.7A is a block diagram of a device for analyzing a social relationship according to an exemplary embodiment herein. As shown in Fig.7A, according to an embodiment, based on the embodiment as shown in Fig.5, the acquiring sub-module 411 may include a second acquiring unit 4112.

The second acquiring unit 4112 may be configured for acquiring a communication duration of communication between the first electronic equipment and the second electronic equipment by Bluetooth, and setting the determined communication duration as the duration of the interaction.

Alternatively, Fig.7B is a block diagram of a device for analyzing a social relationship according to an exemplary embodiment herein. As shown in Fig.7B, according to an embodiment, based on the embodiment as shown in Fig.5, the acquiring sub-module 411 may include a third acquiring unit 4113.

The third acquiring unit 4113 may be configured for acquiring a duration of a call between the first electronic equipment and the second electronic equipment, and setting the determined duration of the call as the duration of the interaction.

In the embodiment, a raw duration of the interaction may be set as the communication duration of Bluetooth communication between the two electronic equipment or the duration of the call between the two electronic equipment, ensuring subsequent qualitative analysis of the inter-user social relationship, improving user experience.

Fig.8 is a block diagram of a device for analyzing a social relationship according to an exemplary embodiment herein. As shown in Fig.8, according to an embodiment, based on the embodiment as shown in Fig.5, the filtering sub-module 412 may include a filtering unit 4121.

The filtering unit 4121 may be configured for acquiring the target information on the interaction by purifying, denoising, and then normalizing the raw information on the interaction acquired by the acquiring sub-module.

In the embodiment, the raw information on the interaction has to be filtered to remove useless information, ensuring accuracy of subsequent qualitative analysis of the inter-user social relationship.

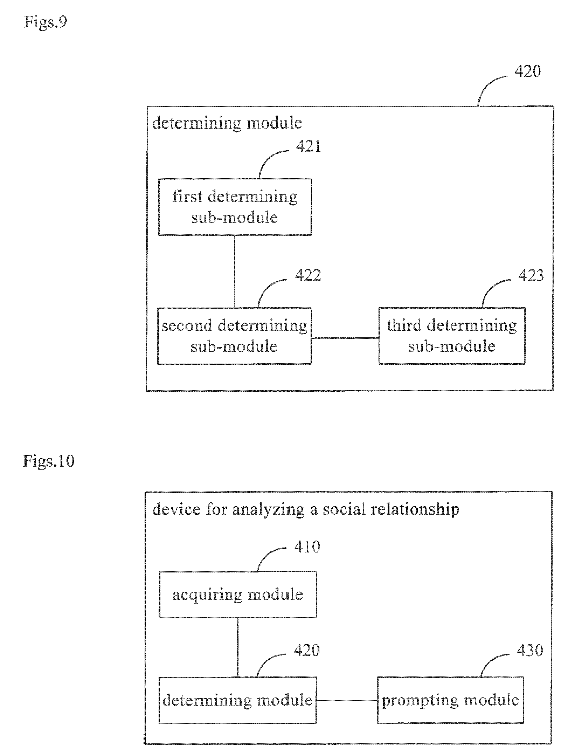

Fig.9 is a block diagram of a device for analyzing a social relationship according to an exemplary embodiment herein. As shown in Fig.9, according to an embodiment, based on the embodiment as shown in Fig.5, the determining module 420 may include at least one of a first determining sub-module 421, a second determining sub-module 422, and a third determining sub-module 423.

The first determining sub-module 421 may be configured for: when a target signal strength of the interaction in the target information on the interaction acquired by the filtering sub-module exceeds a preset strength, determining that the social relationship is a close social relationship.

The second determining sub-module 422 may be configured for: when a target distance of the interaction in the target information on the interaction acquired by the filtering sub-module is less than a preset distance, determining that the social relationship is a close social relationship.

The third determining sub-module 423 may be configured for: when a target duration of the interaction in the target information on the interaction acquired by the filtering sub-module exceeds a preset duration, determining that the social relationship is a close social relationship.

In the embodiment, when the target signal strength of the interaction exceeds the preset strength, and /or the target distance of the interaction is less than the preset distance, and /or the target duration of the interaction exceeds the preset duration, it may be analyzed qualitatively, with a relatively high accuracy, that the users of the two electronic equipment are in a close social relationship, improving user experience.

Fig.10 is a block diagram of a device for analyzing a social relationship according to an exemplary embodiment herein. As shown in Fig.10, according to an embodiment, based on the embodiment as shown in Fig.4, the device may further include a prompting module 430.

The prompting module 430 may be configured for providing, using an application APP, a prompt according to the social relationship determined by the determining module.

In the embodiment, having qualitatively analyzed the inter-user social relationship, a prompt may further be provided according to the social relationship using an APP, improving user experience.

The way in which a module of the device in an aforementioned embodiment executes an operation has been elaborated in an aforementioned embodiment of the method, and will not be elaborated here.

Correspondingly, an embodiment herein may further provide a device for analyzing a social relationship, including:
a processor; and
a memory configured for storing an instruction executable by the processor.

The processor is configured for:
acquiring target information on an interaction between a first electronic equipment and a second electronic equipment; and
determining a social relationship between a first user of the first electronic equipment and a second user of the second electronic equipment according to the target information on the interaction.

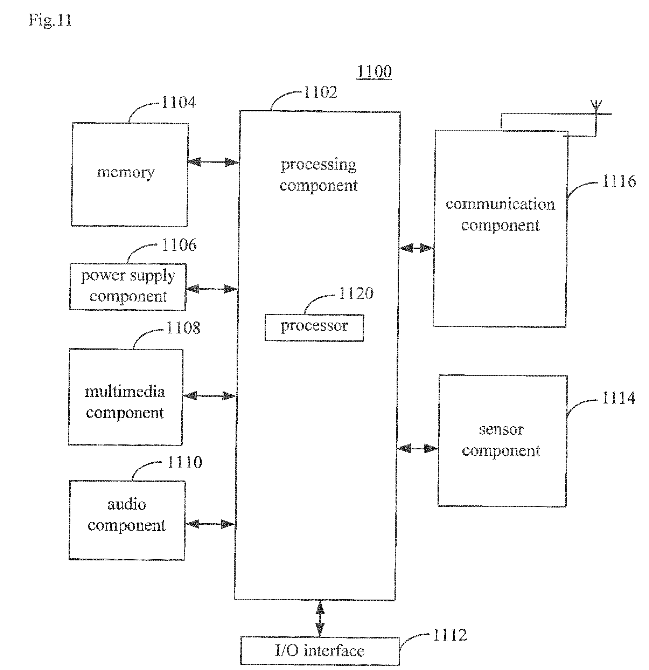

Fig.11 is a diagram of a structure of a device 1100 for analyzing a social relationship according to an exemplary embodiment herein. For example, the device 1100 may be electronic equipment such as a smart terminal. The terminal may be a mobile phone, a computer, a digital broadcasting terminal, a message transceiver, a smart socket, a smart sphygmomanometer, a game console, a tablet device, a medical device, a fitness device, a Personal Digital Assistant, and/or the like.

Referring to Fig.11, the device 1100 may include one or more components as follows: a processing component 1102, a memory 1104, a power supply component 1106, a multimedia component 1108, an audio compone 1110, an Input/Output (I/O) interface 1112, a sensor component 1114, and a communication component 1116.

The processing component 1102 generally controls an overall operation of the device 1100, such as operations associated with display, a telephone call, data communication, a camera operation, and a recording operation. The processing component 1102 may include one or more processors 1120 to execute instructions so as to complete all or some steps of the method. In addition, the processing component 1102 may include one or more modules to facilitate interaction between the processing component 1102 and other components. For example, the processing component 1102 may include a multimedia module to facilitate interaction between the multimedia component 1108 and the processing component 1102.

The memory 1104 may be configured for storing various types of data to support the operation on the device 1100. Example of such data may include instructions of any application or method configured for operating on the device 1100, contact data, phonebook data, messages, pictures, videos, and/or the like. The memory 1104 may be realized by any type of volatile or non-transitory storage equipment or combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, magnetic disk, or compact disk.

The power supply component 1106 may supply electric power to various components of the device 1100. The power supply component 1106 may include a power management system, one or more power sources, and other components related to generating, managing and distributing electricity for the device 1100.

The multimedia component 1108 may include a screen providing an output interface between the device 1100 and a user. In some embodiments, the screen may include a Liquid Crystal Display (LCD) and a Touch Panel (TP). If the screen includes a TP, the screen may be realized as a touch screen to receive an input signal from a user. The TP may include one or more touch sensors for sensing touch, slide and gestures on the TP. The touch sensors not only may sense the boundary of a touch or slide move, but also detect the duration and pressure related to the touch or slide move. In some embodiments, the multimedia component 1108 may include a front camera and/or a rear camera. When the device 1100 is in an operation mode such as a shooting mode or a video mode, the front camera and/or the rear camera may receive external multimedia data. Each of the front camera and the rear camera may be a fixed optical lens system or may have a focal length and be capable of optical zooming.

The audio component 1110 may be configured for outputting and/or inputting an audio signal. For example, the audio component 1110 may include a microphone (MIC). When the device 1100 is in an operation mode such as a call mode, a recording mode, and a voice recognition mode, the MIC may be configured for receiving an external audio signal. The received audio signal may be further stored in the memory 1104 or may be sent via the communication component 1116. In some embodiments, the audio component 1110 may further include a loudspeaker configured for outputting the audio signal.

The I/O interface 1112 may provide an interface between the processing component 1102 and a peripheral interface module. Such a peripheral interface module may be a keypad, a click wheel, a button or the like. Such a button may include but is not limited to: a homepage button, a volume button, a start button, and a lock button.

The sensor component 1114 may include one or more sensors for assessing various states of the device 1100. For example, the sensor component 1114 may detect an on/off state of the device 1100 and relative positioning of components such as the display and the keypad of the device 1100. The sensor component 1114 may further detect a change in the position of the device 1100 or of a component of the device 1100, whether there is contact between the device 1100 and a user, the orientation or acceleration/deceleration of the device 1100, and a change in the temperature of the device 1100. The sensor component 1114 may include a proximity sensor configured for detecting existence of a nearby object without physical contact. The sensor component 1114 may further include an optical sensor such as a Complementary Metal-Oxide-Semiconductor (CMOS) or Charge-Coupled-Device (CCD) image sensor used in an imaging application. In some embodiments, the sensor component 1114 may further include an acceleration sensor, a gyroscope sensor, a magnetic sensor, a pressure sensor, a microwave sensor, or a temperature sensor.

The communication component 1116 may be configured for facilitating wired or wireless communication between the device 1100 and other equipment. The device 1100 may access a wireless network based on a communication standard such as WiFi, 2G or 3G, or combination thereof. In an exemplary embodiment, the communication component 1116 may receive a broadcast signal or broadcast related information from an external broadcast management system via a broadcast channel. In an exemplary embodiment, the communication component 1116 may further include a Near Field Communication (NFC) module for short-range communication. For example, the NFC module may be based on Radio Frequency Identification (RFID), Infrared Data Association (IrDA), Ultra-Wideband (UWB) technology, Bluetooth (BT), and other technologies.

In an exemplary embodiment, the device 1100 may be realized by one or more of Application Specific Integrated Circuits (ASIC), Digital Signal Processors (DSP), Digital Signal Processing Device (DSPD), Programmable Logic Devices (PLD), Field Programmable Gate Arrays (FPGA), controllers, microcontrollers, microprocessors or other electronic components to implement the method.

In an exemplary embodiment, a non-transitory computer-readable storage medium including instructions, such as a memory 1104 including instructions, may be provided. The instructions may be executed by the processor 1120 of the device 1100 to implement the method. For example, the non-transitory computer-readable storage medium may be a Read-Only Memory (ROM), a Compact Disc Read-Only Memory (CD-ROM), a magnetic tape, a floppy disk, optical data storage equipment, etc.

Other embodiments herein will be apparent to those skilled in the art from consideration of the specification and practice of the invention disclosed here. This application is intended to cover any variations, uses, or adaptations of the disclosure following the general principles thereof and including such departures from the present disclosure as come within known or customary practice in the art.

### INDUSTRIAL APPLICABILITY

In an embodiment herein, the first electronic equipment may automatically acquire the target information on the interaction with the second electronic equipment, and then the first electronic equipment may determine a social relationship between a first user of the first electronic equipment and a second user of the second electronic equipment according to the target information on the interaction. Qualitative analysis made based on user-carried electronic equipment may produce a relatively accurate result.

In an embodiment herein, qualitative analysis may be performed on the inter-user social relationship according to a signal strength of the interaction, a distance of the interaction, and a duration of the interaction, improving user experience.

In an embodiment herein, the signal strength may be set as the strength of the Bluetooth signal between the two electronic equipment; the distance of the interaction may be determined using the strength of the Bluetooth signal; alternatively, information on positions of the two electronic equipment may be acquired respectively using GPS, and then the distance of the interaction may be computed according to the information on the positions; the duration of the interaction may be determined according to the communication duration of communication between the electronic equipment by Bluetooth, or according to the duration of a call between the electronic equipment, ensuring accuracy of qualitative analysis of the inter-user social relationship based on the carry-on electronic equipment.

In an embodiment herein, when the target signal strength of the interaction exceeds the preset strength, and /or the target distance is less than the preset distance, and /or the target duration of the interaction exceeds the preset duration, it may be qualitatively analyzed, with a relatively high accuracy, that the users of the two electronic equipment are in a close social relationship, improving user experience.

In an embodiment herein, a prompt may be provided using an APP with the inter-user social relationship produced by the qualitative analysis, improving user experience.

## Claims

1. A method for analyzing a social relationship, **characterized in that** the method comprises:
acquiring target information on an interaction between a first electronic equipment and
a second electronic equipment (101); and
determining a social relationship between a first user of the first electronic equipment and a second user of the second electronic equipment according to the target information on the interaction (102, 303).

2. The method according to claim 1, wherein the acquiring target information on an interaction between a first electronic equipment and a second electronic equipment comprises:
acquiring raw information on the interaction between the first electronic equipment and
the second electronic equipment (101-1, 301); and
acquiring the target information on the interaction by filtering the raw information on the interaction (101-2),
wherein the raw information on the interaction comprises at least one of a signal strength of the interaction, a distance of the interaction, and a duration of the interaction.

3. The method according to claim 2, wherein the signal strength of the interaction is a strength of a Bluetooth signal.

4. The method according to claim 3, wherein the distance of the interaction is acquired by:
acquiring, according to the strength of the Bluetooth signal, the distance of the interaction.

5. The method according to claim 2, 3 or 4 wherein the duration of the interaction is acquired by:
acquiring a communication duration of communication between the first electronic equipment and the second electronic equipment by Bluetooth, and setting the determined communication duration as the duration of the interaction; or
acquiring a duration of a call between the first electronic equipment and the second electronic equipment, and setting the determined duration of the call as the duration of the interaction.

6. The method according to claim 2, 3, 4 or 5 wherein the acquiring the target information on the interaction by filtering the raw information on the interaction comprises:
acquiring the target information on the interaction by purifying, denoising, and then normalizing the raw information on the interaction (302).

7. The method according to any of claims 2 to 6, wherein the determining a social relationship between a first user of the first electronic equipment and a second user of the second electronic equipment according to the target information on the interaction comprises at least one of:
when a target signal strength of the interaction exceeds a preset strength, determining that the social relationship is a close social relationship;
when a target distance of the interaction is less than a preset distance, determining that the social relationship is a close social relationship; and
when a target duration of the interaction exceeds a preset duration, determining that the social relationship is a close social relationship.

8. The method according to any preceding claim, further comprising: after the determining a social relationship between a first user of the first electronic equipment and a second user of the second electronic equipment,
providing, using an application APP, a prompt according to the social relationship (304).

9. A device for analyzing a social relationship, **characterized in that** the device comprises:
an acquiring module (410) configured for acquiring target information on an interaction between a first electronic equipment and a second electronic equipment; and
a determining module (420) configured for determining a social relationship between a first user of the first electronic equipment and a second user of the second electronic equipment according to the target information on the interaction acquired by the acquiring module (410).

10. The device according to claim 9, wherein the acquiring module (410) comprises:
an acquiring sub-module (411) configured for acquiring raw information on the interaction between the first electronic equipment and the second electronic equipment; and
a filtering sub-module (412) configured for acquiring the target information on the interaction by filtering the raw information on the interaction acquired by the acquiring sub-module (411),
wherein the raw information on the interaction comprises at least one of a signal strength of the interaction, a distance of the interaction, and a duration of the interaction.

11. The device according to claim 10, wherein the signal strength of the interaction is a strength of a Bluetooth signal.

12. The device according to claim 11, wherein the acquiring sub-module (411) comprises:
a first acquiring unit (4111) configured for acquiring, according to the strength of the Bluetooth signal, the distance of the interaction.

13. A device (1100) for analyzing a social relationship, **characterized in that** the device (1100) comprises:
a processor (1120); and
a memory (1104) configured for storing an instruction executable by the processor (1120),
wherein the processor (1120) is configured for:
acquiring target information on an interaction between a first electronic equipment and
a second electronic equipment; and
determining a social relationship between a first user of the first electronic equipment and a second user of the second electronic equipment according to the target information on the interaction.

14. A computer program comprising instructions for executing the steps of the method according to any one of claims 1 to 8 when said program is executed by a computer.

15. A recording medium readable by a computer and having recorded thereon a computer program comprising instructions for executing the steps of the method according to any one of claims 1 to 8.

## Amended claims

### Amended claims in accordance with Rule 137(2) EPC.

1. A method for analyzing a social relationship, **characterized in that** the method comprises:
acquiring target information on an interaction between a first electronic equipment and a second electronic equipment (101); and
determining a social relationship between a first user of the first electronic equipment and a second user of the second electronic equipment according to the target information on the interaction (102, 303);
wherein the acquiring target information on an interaction between a first electronic equipment and a second electronic equipment comprises:
acquiring raw information on the interaction between the first electronic equipment and the second electronic equipment (101-1, 301); and
acquiring the target information on the interaction by filtering the raw information on the interaction (101-2),
wherein the raw information on the interaction comprises at least one of a signal strength of the interaction, a distance of the interaction, and a duration of the interaction;
wherein the determining a social relationship between a first user of the first electronic equipment and a second user of the second electronic equipment according to the target information on the interaction comprises at least one of:
when a target signal strength of the interaction exceeds a preset strength, determining that the social relationship is a close social relationship;
when a target distance of the interaction is less than a preset distance, determining that the social relationship is a close social relationship; and
when a target duration of the interaction exceeds a preset duration, determining that the social relationship is a close social relationship.

2. The method according to claim 1, wherein the signal strength of the interaction is a strength of a Bluetooth signal.

3. The method according to claim 2, wherein the distance of the interaction is acquired by:
acquiring, according to the strength of the Bluetooth signal, the distance of the interaction.

4. The method according to claim 2 or 3 wherein the duration of the interaction is acquired by:
acquiring a communication duration of communication between the first electronic equipment and the second electronic equipment by Bluetooth, and setting the determined communication duration as the duration of the interaction; or
acquiring a duration of a call between the first electronic equipment and the second electronic equipment, and setting the determined duration of the call as the duration of the interaction.

5. The method according to claim 2, 3 or 4 wherein the acquiring the target information on the interaction by filtering the raw information on the interaction comprises:
acquiring the target information on the interaction by purifying, denoising, and then normalizing the raw information on the interaction (302).

6. The method according to any preceding claim, further comprising: after the determining a social relationship between a first user of the first electronic equipment and a second user of the second electronic equipment,
providing, using an application APP, a prompt according to the social relationship (304).

7. A device for analyzing a social relationship, **characterized in that** the device comprises:
an acquiring module (410) configured for acquiring target information on an interaction between a first electronic equipment and a second electronic equipment; and
a determining module (420) configured for determining a social relationship between a first user of the first electronic equipment and a second user of the second electronic equipment according to the target information on the interaction acquired by the acquiring module (410);
wherein the acquiring module (410) comprises:
an acquiring sub-module (411) configured for acquiring raw information on the interaction between the first electronic equipment and the second electronic equipment; and
a filtering sub-module (412) configured for acquiring the target information on the interaction by filtering the raw information on the interaction acquired by the acquiring sub-mo dule (411),
wherein the raw information on the interaction comprises at least one of a signal strength of the interaction, a distance of the interaction, and a duration of the interaction.

8. The device according to claim 7, wherein the signal strength of the interaction is a strength of a Bluetooth signal.

9. The device according to claim 8, wherein the acquiring sub-module (411) comprises:
a first acquiring unit (4111) configured for acquiring, according to the strength of the Bluetooth signal, the distance of the interaction.

10. A computer program comprising instructions for executing the steps of the method according to any one of claims 1 to 6 when said program is executed by a computer.

11. A recording medium readable by a computer and having recorded thereon a computer program comprising instructions for executing the steps of the method according to any one of claims 1 to 6.
